# EUROPEAN PATENT APPLICATION

(11) **EP 3 203 343 A1**
(43) Date of publication of application: **09.08.2017**
(21) Application number: 16154620.5
(22) Date of filing: 08.02.2016
(51) Int. Cl.: G05D 1/08, G05D 1/00

(54) **CONTROL SYSTEM FOR RECOVERING AN AIRCRAFT FROM AN UPSET SITUATION, AND AIRCRAFT PROVIDED THEREWITH**

(71) Applicant: Stichting Nationaal Lucht- en Ruimtevaart Laboratorium, 1059 CM Amsterdam (NL)
(72) Inventor: Smaili, Moulay Hafid, 2584 SG Den Haag (NL); Rouwhorst, Wilhelmus Fredericus Jacobus Antonius, 1067 DC Amsterdam (NL)
(74) Representative: Voncken, Bartholomeus Maria Ch.

(57) **Abstract**

A control system is provided for recovering an aircraft from an upset situation outside of a flight envelope, which aircraft comprises aircraft controls connected to cockpit controls and to an autoflight system. The control system at least comprises first means for detecting the occurrence of an upset situation, second means for, when an upset situation has been detected, providing control commands to the aircraft controls for bringing the aircraft in a stable flight condition and third means for, when the aircraft has been brought in a stable flight condition, providing control commands to the autoflight system for stabilizing the aircraft in a safe operational flight condition.

## Description

The invention relates to a control system for recovering an aircraft from an upset situation outside of a flight envelope, which aircraft comprises aircraft controls connected to cockpit controls and to an autoflight system.

Loss-of-control (or loss-of-control in-flight (LOC-I)) is currently the major cause of aircraft accidents worldwide. Prior to a loss of control, the aircraft enters a so-called upset in which the aircraft attains an attitude outside the flight envelope (the set of normal operational flight parameters). In most cases of an LOC-I event, the pilot loses situational awareness preventing him/her to adequately recover from the upset. Examples of conditions that may result in an LOC-I situation (and possible loss of situational awareness) are aerodynamic stalls, extreme atmospheric weather or an incapacitation of the flight crew. Some prominent accident cases of the latter have occurred (Helios Boeing 737-300 5B-DBY in 2005 and Germanwings Airbus A319 smoke event in 2010) and demonstrated that partial or total crew incapacitation is not uncommon. Aircraft accident surveys also show cases where the fly-by-wire envelope protections have been lost making the aircraft vulnerable to upsets.

It is noted that within the present context the indication "aircraft controls" predominantly relates to the assembly of control surfaces (ailerons, elevators and rudder) and engines, together with their primary driving sources; the aircraft controls in this context are connected to and controlled by the cockpit controls (yoke/side stick and throttle which are manipulated by the pilot) or the autoflight system (basically the combination of autopilot and autothrottle). The manner in which these parts are connected may be manifold, such as mechanically, hydraulically or electrically.

It is an object of the present invention to provide a control system which automatically yields a recovery of an aircraft from an upset situation outside of a flight envelope.

In accordance with the present invention such a control system is characterized in that the control system at least comprises first means for detecting the occurrence of an upset situation, second means for, when an upset situation has been detected, providing control commands to the aircraft controls for bringing the aircraft in a stable flight condition and third means for, when the aircraft has been brought in a stable flight condition, providing control commands to the autoflight system for stabilizing the aircraft in a safe operational flight condition.

The recovery carried out by the present control system basically may be split up in three successive stages carried out by three control system components: the first stage as carried out by first (control system) means comprises determining whether indeed an upset situation occurs. If such a determination has yielded a positive result (upset detected), second (control system) means in a second stage provide control commands to the aircraft controls for bringing the aircraft in a stable flight condition, thus a flight condition which does not deteriorate and in which the aircraft is stabilized (but in which it is not yet assured that the flight condition is a safe one). This means that during such a second stage said second means directly control the aircraft controls. Finally, as a third stage, third (control system) means will provide control commands to the autoflight system for further stabilizing the aircraft in a safe operational flight condition, thus a flight condition that is both stable and safe. This means that during such a third stage the on-board autoflight system will be used for controlling the aircraft controls (which, therefore, in said third stage are not directly controlled by the said third means, but indirectly through the autoflight system).

In one embodiment of the control system the first means are provided with an input for receiving current aircraft flight parameters data from sensors for detecting said current aircraft flight parameters, a comparing and detecting logic for comparing the received current aircraft flight parameters data with a set of desired aircraft flight parameters data stored within an aircraft flight parameters database, an output connected to the second means for outputting an activation signal for said second means when the comparing and detecting logic, based upon the comparison, has detected that the received current aircraft flight parameters data differ from data within the set of desired aircraft flight parameters data stored within said aircraft flight parameters database, and an output connected to the third means for outputting an activation signal for said third means when the comparing and detecting logic has detected that the received current aircraft flight parameters data correspond with data within the set of desired aircraft flight parameters data stored within said aircraft flight parameters database.

In such an embodiment the sensors may comprise standard sensors of an aircraft for determining, for example, air speed, angular velocities and altitude. The database may be part of the aircraft but also may be part of the control system. The desired aircraft flight parameters correspond with the flight envelope, and if indeed the comparison has yielded that the received current aircraft flight parameters data differ from data within the set of desired aircraft flight parameters data stored within said aircraft flight parameters database, the control system knows that the aircraft is in an upset situation outside the flight envelope and the second means will be activated. Once such a (ongoing) comparison then yields that the received current aircraft flight parameters data correspond with data within the set of desired aircraft flight parameters data stored within said aircraft flight parameters database, the control system knows that the aircraft is stabilized within the flight envelope and the third means for commanding the autoflight system for further stabilizing the aircraft are activated.

The set of desired aircraft flight parameters data stored within said aircraft flight parameters database may relate to at least a safe flight envelope, but additionally may relate to autoflight system operational limits too.

In one embodiment the control system further comprises fourth means with an input connected to an output of the first means for receiving therefrom a signal representative for the occurrence of an upset situation, an output connected to the autoflight system and an autoflight system disconnect logic for, when a signal representative for the occurrence of an upset situation is received and when the autoflight system is connected to the aircraft controls, outputting a disconnect signal urging the autoflight system to disconnect from the aircraft controls.

In such an embodiment the autoflight system will be disconnected from the aircraft controls during the second stage of the recovery, thus avoiding any conflict between the autoflight system and the control system during such a stage.

If, in such an embodiment, the control system further comprises means for providing a visible and/or audible message indicating a disconnected/connected state of the autoflight system, the flight crew (pilot) is made aware of the status (disconnected/connected) of the autoflight system.

In one embodiment the control system further comprises fifth means with an input connected to a health monitoring unit for receiving therefrom a signal representative for an incapacitation of an aircraft crew or crew member, an output connected to the cockpit controls and a cockpit controls disconnect logic for, when a signal representative for an incapacitation of an aircraft crew or crew member is received, outputting a disconnect signal urging the cockpit controls to disconnect from the aircraft controls.

Such an embodiment avoids any conflict between control commands for the aircraft controls received from the cockpit controls and control system when the cockpit controls are activated in an involuntary manner by the pilot (for example when the pilot is incapacitated and slammed over the cockpit controls, as has been documented for example in cases in which the cockpit has filled with smoke).

It is noted that within the present context the indication "disconnect" may refer to any kind of disconnect, physical or not, resulting in a functional disconnection (in this specific case meaning that an operation of the cockpit controls does not lead to an operation of the aircraft controls).

In such an embodiment too the control system may further comprise means for providing a visible and/or audible message indicating a disconnected/connected state of the cockpit controls.

In another embodiment of the control system the second means comprises a recovery logic designed for providing control commands to the aircraft controls with respect to a control of the longitudinal and lateral aircraft axes and the aircraft speed. For example, such control commands may mimic actions performed by a trained pilot.

Specifically, the recovery logic may be designed for providing control commands to the aircraft controls with respect to achieving a cruise altitude and trimmed airspeed as before the occurrence of the upset, and as a further feature the recovery logic may be designed for comparing the cruise altitude with a minimum safe altitude and for providing control commands to the aircraft controls with respect to achieving the higher one of the cruise altitude and minimum safe altitude.

In one embodiment of the control the third means comprise a stabilizing logic designed for providing control commands to the autoflight system taking into account a Minimum Obstacle Clearance Altitude and speed constraints, and in such an embodiment it further is conceivable that the stabilizing logic with respect to taking into account a Minimum Obstacle Clearance Altitude is designed for using a navigation and terrain database (which may be part of the aircraft, but which also may be incorporated into the control system).

Although the control system in the above has been described as comprising a number of separate means, it is possible that at least two of the first to fifth means, as far as present, and respective logics are combined into a single means and single logic, respectively. The control system may comprise a number of such combined means and logics.

The control system according to the present invention may be designed as a standalone retrofittable unit that is compatible and can interact with any of existing autoflight systems, fly-by-wire systems and navigation/terrain databases on board an aircraft. This allows to modify existing aircraft in a very easy manner to include a control system in accordance with the present invention.

The invention also relates to an aircraft comprising aircraft controls connected to cockpit controls and to an autoflight system and provided with a control system in accordance with any of the previous claims.

Summarizing, the control system in accordance with the present invention enables a fully automatic recovery from a detected upset and stabilization of the aircraft following the recovery, as well as a safe flight condition monitoring to recover from causes that steer the aircraft outside the normal operational flight envelope (in particular single pilot or crew incapacitation). The control system, after initial recovery, assures a safe handover to the existing on-board autoflight system in case of an upset due to, for instance, crew incapacitation, by monitoring for, or recovering from, an initial (unintentional) upset. The comparing and detecting logic will detect any excursions outside both the safe flight envelope and autopilot operational limits.

The aim of the control system is to achieve a controllable state (after an upset has been detected by the system, in terms of aircraft attitude, angular velocities and performance) within acceptable operational limits as defined by standard upset classifications and current flight operations limits. After the control system has handed over the aircraft to the on-board autoflight system (autopilot and autothrottle), the comparing and detecting logic may keep on monitoring the progression of the flight and (again) intervene when the flight operation becomes destabilized again, for instance due to atmospheric effects or system failures.

In case the aircraft gets outside its normal operational flight envelope, for example due to extreme atmospheric events or a medical event causing involuntary pilot control inputs, the comparing and detecting logic of the control system detects an upset or unstable flight condition and the control system will be activated and will recover and stabilize the aircraft from any given flight configuration, hazardous or not, authorized or not, in order to finally hand the aircraft over to the on-board autoflight system in a safe and stable condition.

The control system thus applies a blend of control laws for initial upset recovery (during the second stage) and existing (basic) autoflight system functionalities for fine stabilisation (during the third stage) after automatic upset recovery.

Following an upset with a fully operational crew or pilot, the control system is designed to relieve the pilot/crew from the excessive (and startling) psychological and physiological stresses during an upset to safely recover and stabilize automatically within the normal operational flight envelope. For fly-by-wire equipped aircraft, the system may function as an emergency backup in case the normal envelope protections have been lost.

Now an example of the operation of an embodiment of the control system in accordance with the present invention will be described in case of an upset caused by a medical event with respect to the flight crew or pilot.

Initially the aircraft is flying in a stabilized flight condition at a set cruise altitude and trimmed air speed. The control system is monitoring the flight condition through its first means (with comparing and detecting logic) that receive current aircraft flight parameters data from sensors via its input.

Next the aircraft enters into a flight condition outside the safe flight envelope (for example an abnormal dive). This flight condition appears from a comparison (by the comparing and detecting logic) between the current aircraft flight parameters data received from the sensors and the stored set of desired aircraft flight parameters data, and the control system concludes that an upset occurs.

The medical event (causing, in this example, the incapacitation or unconsciousness of the pilot which slams over the cockpit controls, thus initiating the dive of the aircraft) will be registered by the health monitoring system and will be reported to the control system which, as a result, will initiate a series of commands:
- a command for disconnecting the cockpit controls from the aircraft controls (while providing a corresponding visible and/or audible message);
- a command for disconnecting the autoflight system from the aircraft controls, provided that the autoflight system already was connected/engaged (while providing a corresponding visible and/or audible message);
- commands to the aircraft controls for bringing the aircraft in a stable flight condition (initial upset recovery).

As a result the aircraft will be brought into a stable flight condition, which however not necessarily means a safe flight condition (for example due to the presence of high terrain).

Next, when the aircraft has reached a stable flight condition (which appears from a comparison between the received current aircraft flight parameters data and the set of desired aircraft flight parameters data stored within the aircraft flight parameters database), the control system provides a connect command such that the autoflight system is again activated for, through the aircraft controls, stabilizing the aircraft in a safe operational flight condition (while a corresponding visible and/or audible message is provided indicating the connected/activated state of the autoflight system). As a result the aircraft again enters a safe flight condition in which it reaches the pre-upset cruise altitude (or a minimum safe altitude, whichever is higher) and trimmed air speed.

Finally the control of the aircraft may be handed over to a flight management system of the aircraft, while the control system continuously keeps monitoring the flight condition with relation to the flight enevelope.

The above operation of the control system basically will be the same when the upset is not caused by a medical event of the flight crew/pilot but, for example, by an atmospheric event causing the aircraft to enter a condition outside the flight envelope. However, in such a case it might not be necessary for the control system to disconnect the cockpit controls from the aircraft controls, provided that it will be assured that the pilot will not operate the cockpit controls in a manner conflicting with the commands of the control system.

The invention is not limited to the embodiments described before which may be varied widely within the scope of the invention as defined by the appending claims.

## Claims

1. Control system for recovering an aircraft from an upset situation outside of a flight envelope, which aircraft comprises aircraft controls connected to cockpit controls and to an autoflight system, **characterized in that** the control system at least comprises first means for detecting the occurrence of an upset situation, second means for, when an upset situation has been detected, providing control commands to the aircraft controls for bringing the aircraft in a stable flight condition and third means for, when the aircraft has been brought in a stable flight condition, providing control commands to the autoflight system for stabilizing the aircraft in a safe operational flight condition.

2. Control system according to claim 1, wherein the first means are provided with an input for receiving current aircraft flight parameters data from sensors for detecting said current aircraft flight parameters, a comparing and detecting logic for comparing the received current aircraft flight parameters data with a set of desired aircraft flight parameters data stored within an aircraft flight parameters database, an output connected to the second means for outputting an activation signal for said second means when the comparing and detecting logic, based upon the comparison, has detected that the received current aircraft flight parameters data differ from data within the set of desired aircraft flight parameters data stored within said aircraft flight parameters database, and an output connected to the third means for outputting an activation signal for said third means when the comparing and detecting logic has detected that the received current aircraft flight parameters data correspond with data within the set of desired aircraft flight parameters data stored within said aircraft flight parameters database.

3. Control system according to claim 2, wherein the set of desired aircraft flight parameters data stored within said aircraft flight parameters database relates to at least a safe flight envelope.

4. Control system according to claim 3, wherein the set of desired aircraft flight parameters data stored within said aircraft flight parameters database additionally relates to autoflight system operational limits.

5. Control system according to any of the previous claims, further comprising fourth means with an input connected to an output of the first means for receiving therefrom a signal representative for the occurrence of an upset situation, an output connected to the autoflight system and an autoflight system disconnect logic for, when a signal representative for the occurrence of an upset situation is received and when the autoflight system is connected to the aircraft controls, outputting a disconnect signal urging the autoflight system to disconnect from the aircraft controls.

6. Control system according to claim 5 and further comprising means for providing a visible and/or audible message indicating a disconnected/connected state of the autoflight system.

7. Control system according to any of the previous claims, further comprising fifth means with an input connected to a health monitoring unit for receiving therefrom a signal representative for an incapacitation of an aircraft crew or crew member, an output connected to the cockpit controls and a cockpit controls disconnect logic for, when a signal representative for an incapacitation of an aircraft crew or crew member is received, outputting a disconnect signal urging the cockpit controls to disconnect from the aircraft controls.

8. Control system according to claim 7 and further comprising means for providing a visible and/or audible message indicating a disconnected/connected state of the cockpit controls.

9. Control system according to any of the previous claims, wherein the second means comprises a recovery logic designed for providing control commands to the aircraft controls with respect to a control of the longitudinal and lateral aircraft axes and the aircraft speed.

10. Control system according to claim 9, wherein the recovery logic is designed for providing control commands to the aircraft controls with respect to achieving a cruise altitude and trimmed airspeed as before the occurrence of the upset.

11. Control system according to claim 10, wherein the recovery logic is designed for comparing the cruise altitude with a minimum safe altitude and for providing control commands for the aircraft controls with respect to achieving the higher one of the cruise altitude and minimum safe altitude.

12. Control system according to any of the previous claims, wherein the third means comprise a stabilizing logic designed for providing control commands to the autoflight system taking into account a Minimum Obstacle Clearance Altitude and speed constraints.

13. Control system according to claim 12, wherein the stabilizing logic with respect to taking into account a Minimum Obstacle Clearance Altitude is designed for using a navigation and terrain database.

14. Control system according to any of the previous claims, wherein at least two of the first to fifth means, as far as present, and respective logics are combined into a single means and single logic, respectively.

15. Control system according to any of the previous claims designed as a standalone retrofittable unit that is compatible and can interact with any of existing autoflight systems, fly-by-wire systems and navigation/terrain databases on board an aircraft.

16. Aircraft comprising aircraft controls connected to cockpit controls and to an autoflight system and provided with a control system in accordance with any of the previous claims.
